## Europäisches Patentamt
## European Patent Office
## Office européen des brevets

(19)

(11) Veröffentlichungsnummer: **0 241 569**
**B1**

(12) **EUROPÄISCHE PATENTSCHRIFT**

(45) Veröffentlichungstag der Patentschrift:
05.12.90

(51) Int. Cl.⁵: **H04N 1/40**

(21) Anmeldenummer: **86105185.2**

(22) Anmeldetag: **15.04.86**

(54) **Bildwiedergabesystem zur Erzeugung eines digitalen Bildes.**

(43) Veröffentlichungstag der Anmeldung:
**21.10.87 Patentblatt 87/43**

(45) Bekanntmachung des Hinweises auf die Patenterteilung:
**05.12.90 Patentblatt 90/49**

(84) Benannte Vertragsstaaten:
**AT BE CH DE FR GB IT LI LU NL SE**

(56) Entgegenhaltungen:
EP-A- 0 033 106
GB-A- 2 078 050
US-A- 3 197 558
US-A- 3 757 036
US-A- 4 370 667

PROCEEDINGS OF THE S.I.D., Band 21, Nr. 2, 1980,
Seiten 171-175, Los Angeles, US; S. NAKAYA et al.:
"Gray-scale thermal recording"

(73) Patentinhaber: **MAURER ELECTRONICS GMBH,**
**Nymphenburger Strasse 154, D-8000 München 19(DE)**

(72) Erfinder: **Maurer, Thomas, Apolloweg 12,**
**D-8000 München 60(DE)**

(74) Vertreter: **TER MEER - MÜLLER - STEINMEISTER &**
**PARTNER, Mauerkircherstrasse 45,**
**D-8000 München 80(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Bildwiedergabesystem zur Erzeugung eines digitalen Bildes gemäß dem Oberbegriff des Patentanspruchs 1.

Ein derartiges Bildwiedergabesystem ist bereits aus der EP-A 0 033 106 bekannt. Dieses bekannte Bildwiedergabesystem enthält

– einen Datenspeicher, der einen Bildspeicher und einen Textspeicher aufweist,
– einen Laserdrucker zum Ausdrucken von im Bildspeicher gespeicherten Bildelementdaten und/oder von im Textspeicher gespeicherten Textdaten mit Hilfe einer Laserdiode,
– zwei Zeilenspeicher zur Speicherung von Daten für jeweils zwei aufeinanderfolgende Zeilen des Bildes,
– einen Zähler,
– ein ODER-Gatter, über dessen Ausgang ein von der Laserdiode abgegebener Laserstrahl moduliert wird, und
– einen Rechner zur Betriebssteuerung.

Aus der US-A 4 370 667 ist ferner ein Bildverarbeitungssystem bekannt, das einen Zähler enthält, dessen Zählwert für aufeinanderfolgende Bildelementdaten entlang einer Schreibzeile jeweils neu auf einen Wert gesetzt wird, der dem Grauwert für ein Bildelement entspricht, und der daher ein Zählerausgangssignal liefert, das proportional zum jeweiligen Grauwert ist. Ferner ist ein UND-Gatter vorhanden, das an einem Eingang das Zählerausgangssignal empfängt und in diesem Falle ein Hochfrequenzsignal von einem Hochfrequenzoszillator zu einer Laserdiode eines Laserdruckers überträgt.

Generell ist es bereits aus der US-A 3 757 036 bekannt, bei Halbtonbildern die zur Grautonerzeugung in den Bildelementen dienenden Balken bzw. Linien nicht nur miteinander fluchten, sondern auch aneinander angrenzen zu lassen, um das Entstehen von Zeilenzwischenräumen zu vermeiden.

Darüber hinaus ist die Verwendung von Zeilenspeichern an sich aus der GB-A 2 078 050 bekannt.

Der Erfindung liegt die Aufgabe zugrunde, das eingangs genannte Bildwiedergabesystem so weiterzubilden, daß sich die Grauwerteinstellung in den einzelnen Bildelementbereichen mit einer einfacher ausgebildeten und daher kostengünstiger herstellbaren elektronischen Einrichtung realisieren läßt.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Das Bildwiedergabesystem nach der Erfindung zeichnet sich dadurch aus, daß

– die beiden Zeilenspeicher eingangsseitig mit dem Bildspeicher und ausgangsseitig mit dem Zähler verbunden sind, um alternierend mit den Bildelementdaten geladen zu werden und diese dann zum Zähler zu liefern, wenn der jeweils andere Zeilenspeicher geladen wird,
– der Ausgang des Zählers mit einem Eingang des ODER-Gatters verbunden ist, dessen anderer Eingang ein aus den Textdaten gewonnenes Textsignal vom Laserdrucker empfängt, und
– der Zählwert des Zählers für aufeinanderfolgende Bildelemente entlang einer jeden Zeile des Bildes jeweils neu auf einen Wert gesetzt wird, der dem jeweiligen Grauwert für ein Bildelement entspricht, so daß der Zähler so lange ein die Laserdiode einschaltendes Zählerausgangssignal liefert, bis der Zählwert den Wert Null erreicht hat.

Die Neueinstellung des Zählers erfolgt vorteilhaft immer dann, wenn ein Periodeneinstellzähler eine vorgegebene Anzahl von Zählschritten durchlaufen hat, durch die die Größe eines Bildelementes in Zeilenrichtung des Bildes bestimmt wird. Ist ein Bildelement beispielsweise aus vier Pixeln quadratisch aufgebaut, so beträgt die Bildelementperiode zwei Pixelbreiten. Bei Bildelementen mit nur einem Pixel beträgt die Bildelementperiode eine Pixelbreite. Der Zähler wird dann zu Beginn einer jeweiligen Periode auf einen Zählwert gesetzt, der dem Schwärzungswert des Bildbereichs entspricht, welcher durch das Bildelement reproduziert werden soll.

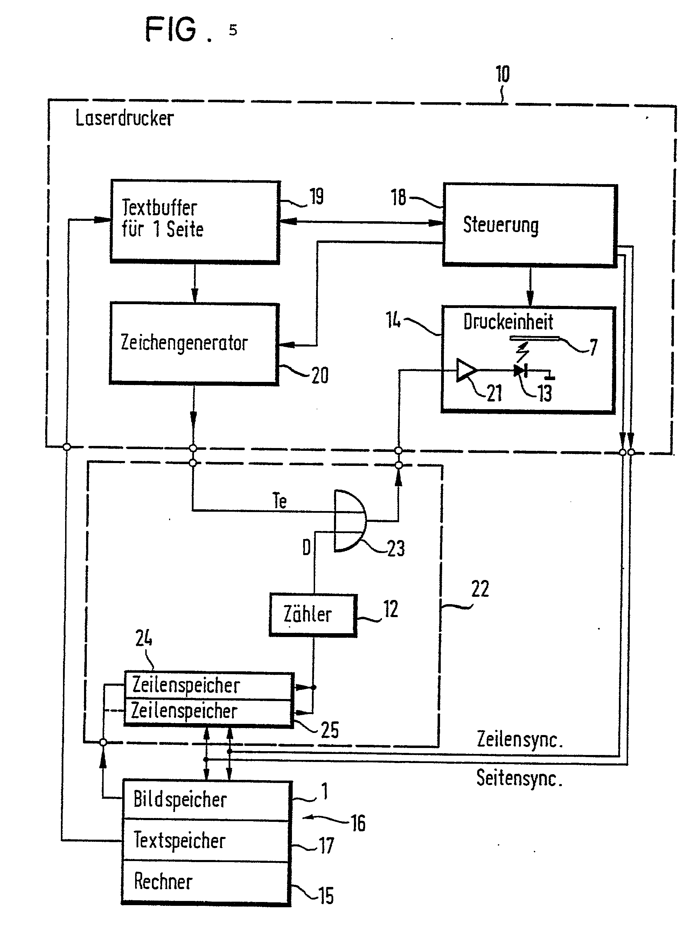

In Übereinstimmung mit der Größe des Bildelementes müssen die Bildelementdaten einer Bildzeile so oft wiederholt ausgelesen werden, daß die Anzahl der Pixel in Y-Richtung (Transportrichtung des Bildträgers) gleich der Anzahl der Pixel in X-Richtung (Schreibzeilenrichtung) entspricht. Selbstverständlich kann der Periodenzähler auch so eingestellt werden, daß seine Periode bei Bildelementen mit nur einem Pixel kleiner als die Pixelperiode ist, oder daß sie bei Bildelementen mit mehr als einem Pixel kleiner als die Bildelementperiode ist. Der Zählwert des Zählers für die Linien- bzw. Balkenbreite muß dann entsprechend herabgesetzt werden (Fig. 3(a), rechte Hälfte).

Nach einer sehr vorteilhaften Ausgestaltung der Erfindung ist zwischen den Ausgängen der zusätzlichen Zeilenspeicher und dem Eingang des Zählers ein Tabellenspeicher angeordnet, in dem der Zusammenhang zwischen dem durch die Bildelementdaten bestimmten Grauwert und dem für die Erzeugung dieses Grauwertes erforderlichen Zählerwert gespeichert ist, der bei Eingang der Bildelementdaten an den Zähler geliefert wird. Durch diesen Tabellenspeicher kann der erforderliche Zählerwert sehr schnell bestimmt werden.

Die Erfindung wird nachfolgend unter Bezugnahme und die Zeichnung näher beschrieben. Es zeigen:

Figur 1 einen Ausschnitt eines in einem Bildspeicher gespeicherten Datenfeldes für ein Bild mit einzelnen Bildbereichen,
Figuren 2(a) bis 2(c) Bildelemente zur Reproduktion jeweils eines Bildbereiches des Datenfeldes,
Figuren 3(a) bis 3(c) graphische Darstellungen zur Erläuterung der Einstellung der Breite einer Linie innerhalb eines Bildelementes entsprechend einem vorgegebenen Schwärzungswert,
Figur 4 den Zusammenhang zwischen der Schwärzung und einem Zählwert eines Zählers zur Linienverbreiterung,

Figur 5 ein Blockschaltbild eines Bildwiedergabesystems und

Figur 6 verschiedene Signalablaufdiagramme zur Erläuterung der Betriebsweise des Periodeneinstellzählers und des Zählers für die Verbreiterung der Linien innerhalb der Bildelemente.

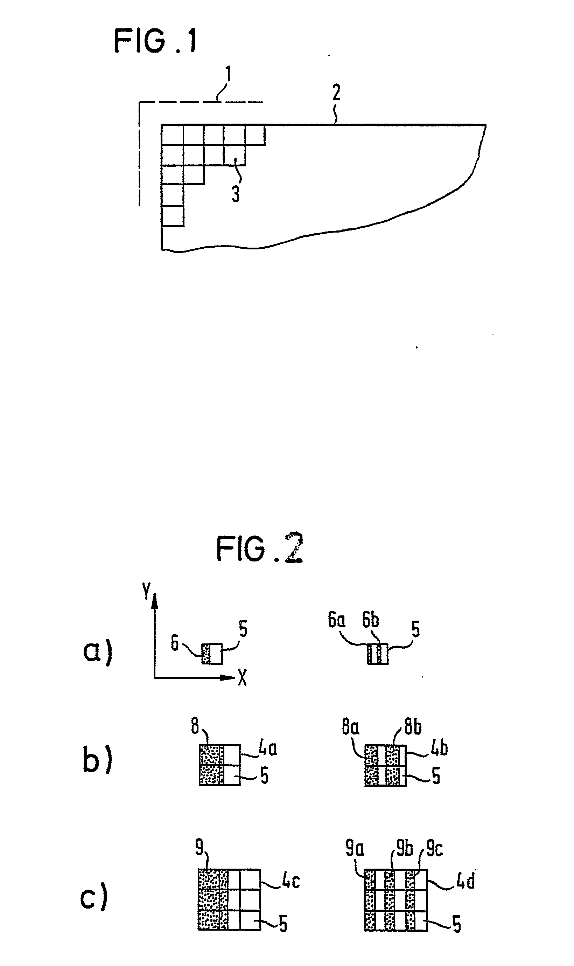

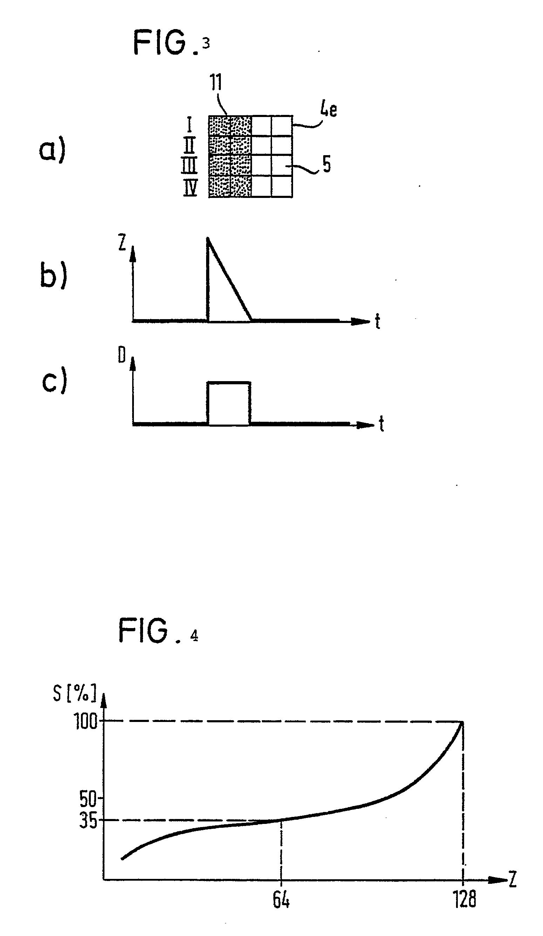

In der Figur 1 ist ein Bildspeicher 1 schematisch dargestellt, in dem ein Datenfeld 2 mit mehreren Bildbereichen 3 eines Bildes gespeichert ist. Jedem Bildbereich 3 sind Bildelementdaten zugeordnet, die einen Grauwert bzw. Schwärzungswert S für den jeweiligen Bildbereich 3 angeben.

Die Figuren 2(a) bis 2(c) zeigen Bildelemente, wie sie zur Reproduktion des digitalen Bildes erzeugt werden. Gemäß der Figur 2(a) besteht ein Bildelement aus jeweils einem Pixel 5. Bei dem links dargestellten Pixel 5 befindet sich am linken Rand eine Linie 6, deren Längsrichtung in Transportrichtung des Bildträgers 7 (vgl. Figur 5) verläuft, also im vorliegenden Fall in Y-Richtung des Bildträgers 7. Die Breite der Linie 6 erstreckt sich dagegen in Schreibzeilenrichtung des Laserdruckers 10, also in X-Richtung senkrecht zur Y-Richtung. Diese Breite der innerhalb des Pixels 5 vorhandenen Linie 6 wird in Übereinstimmung mit dem Schwärzungswert S eingestellt, der dem Bildbereich 3 zugeordnet ist, welcher mit Hilfe des Pixels 5 reproduziert werden soll. Die Linienbreite ist dabei in Stufen einstellbar, deren Breite jeweils 1/32 der Pixelbreite beträgt. Insgesamt lassen sich somit innerhalb des Pixels 5 32 + 1 verschiedene Grauwerte erzeugen.

Innerhalb des in Figur 2(a) rechts dargestellten Pixels 5 sind zwei Linien 6a und 6b vorhanden, durch die ebenfalls ein Grauwert S erzeugt werden kann, wie er mit Hilfe des Pixels 5 links in Figur 2(a) erhalten wird.

Werden die Bildbereiche 3 des Datenfeldes 2 durch derartige Pixel 5 reproduziert, so liegen die Linien 6 bzw. 6a, 6b in Y-Richtung jeweils aufeinander ausgerichtet hintereinander und können zudem mit ihren Stirnseiten aneinander angrenzen. Bei Anlagerung von Tonermaterial an das durch die Pixel 5 aufgebaute latente Bild werden in diesem Fall praktisch keine Übergänge zwischen den in Y-Richtung benachbarten Pixeln im Tonerbild erhalten, so daß im reproduzierten Bild keine störenden Linien in X-Richtung verlaufen. Jede Schreibzeile kann gegenüber der vorhergehenden aber auch in Schreibzeilenrichtung verschoben sein, um andere gewünschte Bildraster zu erhalten.

Auflösungsvermögen, Linearität und Dynamik bzw. Schwärzungsumfang sind relativ groß, da die Pixelgröße klein ist und innerhalb eines Pixels 5 der Schwärzungswert S aufgrund der feinen Unterteilbarkeit der Linienbreite genau eingestellt werden kann.

Die Figur 2(b) zeigt zwei Bildelemente 4a, 4b, die jeweils aus vier Pixeln 5 und quadratisch aufgebaut sind. Das Bildelement 4a enthält an seinem linken Rand eine Linie 8, die sich in ihrer Längsrichtung über praktisch zwei Schreibzeilen des Laserdruckers 10 erstreckt. Im Bildelement 4b sind zwei Linien 8a, 8b vorhanden, die sich ebenfalls über zwei Schreibzeilen in Y-Richtung erstrecken. Jeweils ein Bildbereich 3 wird in diesem Fall entweder durch das Bildelement 4a oder das Bildelement 4b reproduziert. Auch hier entspricht die Breite bzw. Gesamtbreite der Linien 8 bzw. 8a, 8b dem gewünschten Schwärzungswert des Bildbereichs 3. Das Auflösungsvermögen ist allerdings gegenüber dem ersten Ausführungsbeispiel aufgrund der größeren Bildelemente 4a, 4b verringert. Dagegen sind Linearität und Dynamik verbessert. Insgesamt lassen sich innerhalb der Bildelemente 4a, 4b jeweils doppelt so viele Graustufen einstellen, wie bei den jeweils über ihnen dargestellten Bildelementen 5.

Weitere Beispiele von Bildelementen 4c, 4d sind in Figur 2(c) dargestellt, wobei das Bildelement 4c neun Pixel 5 und eine am linken Rand liegende Linie 9 enthält, während das Bildelement 4d neun Pixel 5 und drei Linien 9a, 9b, 9c enthält, die sich in Längsrichtung bzw. Y-Richtung über drei Schreibzeilen des Laserdruckers 10 erstrecken. Auch in diesem Fall wird jeweils ein Bildbereich 3 durch die Bildelemente 4a bzw. 4d reproduziert.

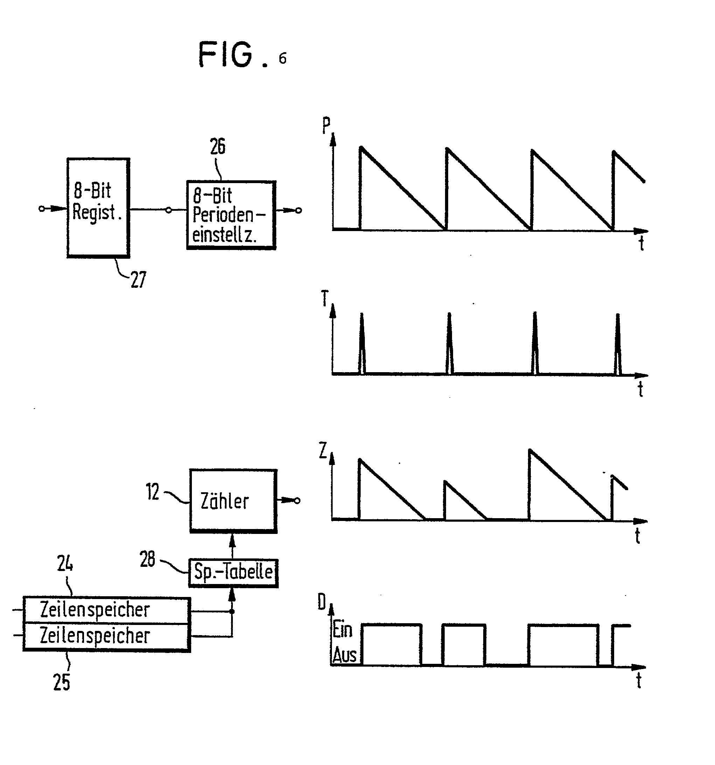

Anhand der Figuren 3 und 4 wird nachfolgend genauer erläutert, wie die Schwärzung eines Bildbereichs durch Linienverbreiterung eingestellt wird. Figur 3(a) zeigt ein Bildelement 4e mit sechzehn Pixeln 5 zur Reproduktion eines Bildbereichs 3 mit einem Schwärzungswert S, der bei ca. 35% der Gesamtschwärzung liegt. Bei Unterteilung der Breite eines Pixels 5 in 32 Stufen, wird die Gesamtschwärzung von 100% nach 128 Stufen erreicht, während eine Schwärzung von ca. 35% schon nach 64 Stufen (vgl. Figur 4) erhalten wird. Bei dieser Schwärzung von ca. 35% ist also das Bildelement 4e zur Hälfte mit einer Linie 11 ausgefüllt, die sich in Y-Richtung über vier Schreibzeilen des Laserdruckers 10 erstreckt. Erreicht der Laserstrahl des Laserdruckers 10 entlang einer Schreibzeile I das Bildelement 4e, so wird zunächst der Zählwert Z eines Zählers 12 auf einen Wert gesetzt, der der gewünschten Schwärzung S entspricht, und zwar in Übereinstimmung mit dem in Figur 4 dargestellten Schwärzungsverlauf. Der Zählwert Z beträgt also in diesem Fall 64. Der Zähler 12 in den Figuren 5 bzw. 6 ist so eingestellt, daß er den eingestellten Zählwert bis auf Null vermindert. Solange er herabzählt, liefert er in Übereinstimmung mit dem in Figur 3(b) gezeigten Zähldiagramm ein Zählerausgangssignal D entsprechend der Figur 3(c), das zur Ansteuerung einer Laserdiode 13 innerhalb einer Druckeinheit 14 des Laserdruckers 10 dient. Solange also die Laserdiode 13 durch das Zählerausgangssignal D angesteuert wird, wird die Breite der Linie 11 in Figur 3(a) in Schreibrichtung der Zeile I verbreitert, bis der Zählwert Null erreicht ist. Da insgesamt vier Pixel 5 in Schreibzeilenrichtung vorhanden sind, wird dieser Vorgang für vier aufeinanderfolgende Schreibzeilen I bis IV wiederholt, um ein quadratisches Bildelement 4e zu erhalten. Soll eine breitere oder schmälere Linie 11 in Übereinstimmung mit dem jeweiligen Schwärzungswert des Bildbereichs 3 erzeugt werden, so wird der Zähler 12 zu Beginn auf einen entsprechend größeren oder kleineren Zählwert Z gesetzt.

Die Größe der kleinsten Bildeinheit zur Erzeugung eines digitalen Bildes entspricht also nicht der Größe eines Pixels sondern der Größe eines Linienelements innerhalb des Pixels, dessen Breite nur ein Bruchteil der Pixelbreite beträgt. Eine Linie mit einer derart geringen Linienbreite läßt sich beispielsweise durch eine nur minimale Ablenkung des Laserstrahls erzeugen.

In der Figur 5 ist ein Bildwiedergabesystem nach der Erfindung dargestellt. Dieses Bildwiedergabesystem weist einen konventionellen Rechner 15, einen Datenspeicher 16 mit dem genannten Bildspeicher und einem Textspeicher 17 sowie den bereits erwähnten Laserdrucker 10 auf. Der Laserdrucker 10 enthält die Druckeinheit 14 mit der Laserdiode 13, eine Steuerung 18, einen Textbuffer 19 für eine Seite sowie einen Zeichengenerator 20. Text aus dem Textspeicher 17 wird seitenweise in den Textbuffer 19 und über den Zeichengenerator 20 zur Druckeinheit 14 geleitet, um mittels der Laserdiode 13, der ein Verstärker 21 vorgeschaltet ist, auf dem Bildträger 7 abgedruckt zu werden. Der Druckvorgang erfolgt unter Kontrolle des Rechners 15 und der Steuerung 18, die ihrerseits ein Zeilensynchronisationssignal und ein Seitensynchronisationssignal zum Rechner 15 bzw. zum Datenspeicher 16 liefert.

Das Bildwiedergabesystem weist eine zusätzliche Einheit 22 auf, die den bereits erwähnten Zähler 12 zur Linienverbreiterung, ein logisches ODER-Gatter 23 und zwei Zeilenspeicher 24, 25 enthält. Die beiden Zeilenspeicher 24, 25 (Zeilenpuffer) sind eingangsseitig mit dem Bildspeicher 1 und ausgangsseitig mit dem Zähler 12 verbunden, dessen Ausgang seinerseits mit einem Eingang des ODER-Gatters 23 verbunden ist. Der andere Eingang des ODER-Gatters 23 ist mit dem Zeichengenerator 20 verbunden. Ausgangsseitig ist das ODER-Gatter 23 über den Verstärker 21 mit der Laserdiode 13 der Druckeinheit 14 verbunden. Die Zeilenspeicher 24, 25 empfangen ebenfalls das Zeilensynchronisationssignal und das Seitensynchronisationssignal von der Steuerung 18 des Laserdruckers 10.

Solange Text gedruckt wird, liefert der Zeichengenerator 20 ein Textsignal Te über das ODER-Gatter 23 und den Verstärker 21 zur Laserdiode 13. Sobald innerhalb eines Textes auf einer Seite ein Bild erzeugt werden soll, was anhand eines entsprechenden Hinweises (Steuerkennzeichen im vorbereiteten Text) erkannt wird, werden Bildelementdaten aus dem Bildspeicher 1 für die jeweils nächsten beiden Schreibzeilen des Laserdruckers 10 in den Zeilenspeichern 24 und 25 zeilenweise gespeichert. Die Bildelementdaten aus dem Zeilenspeicher 24 werden der Reihe nach zum Zähler 12 übertragen, dessen Zählwert Z durch die aufeinanderfolgenden Bildelementdaten entlang einer Schreibzeile jeweils neu auf einen Wert gesetzt wird, der dem jeweiligen Datenwert bzw. Schwärzungswert für ein Bildelement entspricht, und der solange ein Zählerausgangssignal D liefert, bis sein Zählwert Z den Wert Null erreicht hat. Dieses Zählerausgangssignal D wird ebenfalls über das ODER-Gatter 23 und den Verstärker 21 zur Laserdiode 13 übertragen, um auf dem Bildträger 7 eine Bildzeile abzudrucken. Auf diese Weise werden entlang der Bildzeile innerhalb der einzelnen Bildelemente die Linien mit einer Breite erzeugt, die dem jeweiligen Zählwert Z des Zählers 12 entspricht. Die Linienbreite wird also durch das Zählerausgangssignal D des Zählers 12 gesteuert. Selbstverständlich können das Textsignal Te und das Zählerausgangssignal D auch gleichzeitig erzeugt werden, so daß Text innerhalb eines Bildbereichs geschrieben werden kann.

Die Neueinstellung des Zählers 12 (Fig. 6) erfolgt immer dann, wenn ein Periodeneinstellzähler 26 eine vorgegebene Anzahl von Zählschritten durchlaufen hat, durch die die Größe eines Bildelementes in Schreibzeilenrichtung bestimmt wird. Durch den Periodeneinstellzähler 26 wird also die Bildelementperiode P festgesetzt. Dazu wird der Zählwert des Periodeneinstellzählers 26 periodisch auf einen Zählwert gesetzt, der ihn aus einem 8-Bit-Register 27 zugeführt wird. Der Zählwert im 8-Bit-Register 27 wird durch den Rechner in Übereinstimmung mit der Bildelementgröße gespeichert. Ist beispielsweise der Zählwert 32 in Übereinstimmung mit der Figur 2(a), so ist die Bildelementperiode P die Pixelperiode. Bei einem Zählwert von 64 für den Periodeneinstellzähler 26 beträgt die Bildelementperiode P zwei Pixelperioden, und so weiter. In Übereinstimmung mit dem Beginn einer Periode P wird ein Taktsignal T in Abhängigkeit der Zeit t geliefert, durch das veranlaßt wird, daß der Zähler 12 auf seinen Zählwert Z für die folgende Bildelementperiode P gesetzt wird. Beide Zähler 26 und 12 werden mit der gleichen konstanten Frequenz getaktet. Dabei ist der Zählwert des Zählers 12 immer gleich oder kleiner als der Zählwert des Zählers 26. In Übereinstimmung mit der Zähldauerr des Zählers 12 wird dann das bereits erwähnte Zählerausgangssignal D zur Ein- und Ausschaltung der Laserdiode 13 des Laserdruckers 10 erzeugt, wie in Figur 6 zu erkennen ist.

Vorteilhafterweise ist zwischen dem Ausgang der Zeilenspeicher 24, 25 und dem Eingang des Zählers 12 ein Tabellenspeicher 28 angeordnet, in dem der Zusammenhang zwischen dem durch die Bildelementdaten bestimmten Grauwert und dem für die Erzeugung dieses Grauwertes erforderlichen Zählwert gespeichert ist, wobei der Zählwert Z bei Eingang der Bildelementdaten in den Tabellenspeicher 28 an den Zähler 12 geliefert wird.

Aufgrund der hohen Ablenkgeschwindigkeit des Laserdruckers 10 sind zwei Zeilenspeicher 24, 25 vorhanden. Diese sind so mit dem Bildspeicher 1 und dem Zähler 12 verbunden, daß die Ausgabe der Bilddaten zum Zähler 12 immer aus nur einem Zeilenspeicher (z.B. 24) erfolgt, während der jeweils andere (z.B. 25) unabhängig von dem fest eingestellten Zeitverhalten des Laserdruckers 10 durch den Rechner 15 mit Bildelementdaten aus dem Bildspeicher 1 geladen werden kann. Der Rechner 1 kontrolliert, aus welchem Zeilenspeicher 24, 25 die Bilddaten an den Zähler 12 ausgegeben werden, und welcher Zeilenspeicher 24, 25 dementsprechend gerade geladen wird.

## Patentansprüche

1. Bildwiedergabesystem zur Erzeugung eines digitalen Bildes mit

- einem Datenspeicher (16), der einen Bildspeicher (1) und einen Textspeicher (17) enthält,
- einem Laserdrucker (10) zum Ausdrucken von im Bildspeicher (1) gespeicherten Bildelementdaten und/oder von im Textspeicher (17) gespeicherten Textdaten mit Hilfe einer Laserdiode (13),
- zwei Zeilenspeicher (24, 25) zur Speicherung von Daten für jeweils zwei aufeinanderfolgende Zeilen des Bildes,
- einem Zähler (12),
- einem ODER-Gatter (23), über dessen Ausgang ein von der Laserdiode (13) abgegebener Laserstrahl moduliert wird, und
- einem Rechner (15) zur Betriebssteuerung, dadurch gekennzeichnet, daß
- die beiden Zeilenspeicher (24, 25) eingangsseitig mit dem Bildspeicher (1) und ausgangsseitig mit dem Zähler (12) verbunden sind, um alternierend mit den Bildelementdaten geladen zu werden und diese dann zum Zähler (12) zu liefern, wenn der jeweils andere Zeilenspeicher geladen wird,
- der Ausgang des Zählers (12) mit einem Eingang des ODER-Gatters (23) verbunden ist, dessen anderer Eingang ein aus den Textdaten gewonnenes Textsignal (Te) vom Laserdrucker (10) empfängt, und
- der Zählwert (Z) des Zählers (12) für aufeinanderfolgende Bildelemente entlang einer jeden Zeile des Bildes jeweils neu auf einen Wert gesetzt wird, der dem jeweiligen Grauwert für ein Bildelement entspricht, so daß der Zähler (12) so lange ein die Laserdiode (13) einschaltendes Zählerausgangssignal (D) liefert, bis der Zählwert (Z) den Wert Null erreicht hat.

2. Bildwiedergabesystem nach Anspruch 1, dadurch gekennzeichnet, daß die Neueinstellung des Zählers (12) immer dann erfolgt, wenn ein Periodeneinstellzähler (26) eine vorgegebene Anzahl (P) von Zählschritten durchlaufen hat, durch die die Größe eines Bildelements in Richtung der Zeile des Bildes bestimmt wird.

3. Bildwiedergabesystem nach Anspruch 1 oder 2, dadurch gekennzeichnet, daß in Übereinstimmung mit der Größe des Bildelements die Bildelementdaten einer Bildzeile wiederholt auslesbar sind.

4. Bildwiedergabesystem nach einem der Ansprüche 1 bis 3, dadurch gekennzeichnet, daß zwischen den Ausgängen der Zeilenspeicher (24, 25) und dem Eingang des Zählers (12) ein Tabellenspeicher (28) angeordnet ist, in dem der Zusammenhang zwischen dem durch die Bildelementdaten bestimmten Grauwert und dem für die Erzeugung dieses Grauwerts erforderlichen Zählerwert (Z) gespeichert ist, der bei Eingang der Bildelementdaten an den Zähler (12) geliefert wird.

## Claims

1. Picture reproduction system for producing a digital picture with
- a data store (16) containing a picture store (1) and a text store (17),
- a laser printer (10) for printing out picture element data stored in the picture store (1) and/or text data stored in the text store (17) with the aid of a laser diode (13),
– two line stores (24, 25) for storage of data for two successive lines in the picture,
– a counter (12),
– an OR circuit (23), via the output of which a laser beam emitted by the laser diode (13) is modulated, and
– a computer (15) for operational control, in which
– the two line stores (24, 25) are connected on the input side to the picture store (1) and on the output side to the counter (12) in order to be loaded alternately with the picture element data and then to supply the latter to the counter (12), when the other line store is being loaded,
– the output of the counter (12) is connected to an input of the OR circuit (23), the other input of which receives a text signal (Te) obtained from the text data from the laser printer (10), and
– the counting value (Z) of the counter (12) for successive picture elements along each line of the picture is reset each time to a value corresponding to the respective grey value for a picture element, so that the counter (12) supplies a counter output signal (D) switching on the laser diode (13) until the counting value (Z) has reached zero.

2. Picture reproduction system according to claim 1, in which the counter (12) is always reset when a cycle setting counter (26) has passed through a predetermined number (P) of counting steps, which determines the size of a picture element in the direction of the picture line.

3. Picture reproduction system according to claim 1 or 2, in which the picture element data of a picture line can be repeatedly read out in conformity with the size of the picture element.

4. Picture reproduction system according to one of Claims 1 to 3, in which a table store (28), in which is stored the relationship between the grey value determined by the picture element data and the counter value (Z) required for production of this grey value, which is supplied to the counter (12) on input of the picture element data, is arranged between the outputs of the line store (24, 25) and the input of the counter (12).

## Revendications

1. Système de reproduction d'images comportant:
– une mémoire de données (16), qui comporte une mémoire d'images (1) et une mémoire de texte (17),
– une imprimante laser (10) servant à imprimer, à l'aide d'une diode laser (13), des données d'élément d'image stockées dans la mémoire d'images (1) et/ou des données de texte stockées dans la mémoire de texte (17),
– deux mémoires de ligne (24, 25) servant à stocker des données correspondant à chaque fois à deux lignes successives de l'image,
– un compteur (12),
– une porte OU inclusif (23), par l'intermédiaire de la sortie de laquelle est modulé un faisceau laser émis par la diode laser (13), et

– un ordinateur (15) servant à commander le fonctionnement, caractérisé en ce que:

– les deux mémoires de ligne (24, 25) sont reliées du côté entrée à la mémoire d'images (1) et du côté sortie au compteur (12), afin d'être alternativement chargées à l'aide des données d'élément d'image et de délivrer alors chacune ces données au compteur (12) lorsque l'autre mémoire de ligne est en cours de chargement,

– la sortie du compteur (12) est reliée à une entrée de la porte OU (23), l'autre entrée de celle-ci recevant de l'imprimante laser (10) un signal de texte (Te) obtenu à partir des données de texte, et

– pour des éléments d'image se succédant le long de l'une des différentes lignes de l'image, la valeur de comptage (Z) du compteur (12) est calée chaque fois à nouveau à une valeur qui correspond à la valeur de gris prévue pour un élément d'image donné, de sorte que, jusqu'à ce que la valeur de comptage (Z) ait atteint la valeur zéro, le compteur (12) délivre un signal de sortie de compteur (D) mettant la diode laser (13) en circuit.

2. Système de reproduction d'images suivant la revendication 1, caractérisé en ce que le réglage à nouveau du compteur (12) s'effectue toujours au moment où un compteur de réglage de période (26) a franchir un nombre (P) de pas de comptage qui est fixé à l'avance et à l'aide duquel est déterminée la grandeur d'un élément d'image suivant la direction de la ligne de l'image.

3. Système de reproduction d'images suivant la revendication 1 ou 2, caractérisé en ce que les données d'élément d'image d'une ligne d'image peuvent être lues de manière répétée en fonction de la taille de l'élément d'image.

4. Système de reproduction d'images suivant l'une des revendications 1 à 3, caractérisé en ce que, entre les sorties des mémoires de ligne (24, 25) et l'entrée du compteur (12), est disposée une mémoire de table à consulter (28) dans laquelle est stockée la relation existant entre la valeur de gris déterminée par les données d'élément d'image et la valeur de comptage (Z) qui est nécessaire pour produire cette valeur de gris et qui est délivrée au compteur (12) lors de l'entrée des données d'élément d'image.

# FIG .1

# FIG .2

FIG. 3

FIG. 4

# FIG . 5

# FIG . 6